# EUROPEAN PATENT APPLICATION

(11) **EP 3 376 364 A1**
(43) Date of publication of application: **19.09.2018**
(21) Application number: 18162167.3
(22) Date of filing: 16.03.2018
(51) Int. Cl.: G06F 3/12, G03G 21/02

(54) **CHARGE CALCULATION APPARATUS, METHOD, AND SYSTEM**

(30) Priority: 16.03.2017 JP 2017050919
(71) Applicant: Seiko Epson Corporation, Tokyo 160-8801 (JP)
(72) Inventor: KAMIJIMA, Kyoichi, Nagano, 392-8502 (JP); SUZUKI, Hiroyuki, Nagano, 392-8502 (JP); NISHIWAKI, Kazuya, Nagano, 392-8502 (JP)
(74) Representative: MERH-IP Matias Erny Reichl Hoffmann Patentanwälte PartG mbB

(57) **Abstract**

A charge calculation apparatus (20, 30) includes: a consumed amount acquisition section (40) that acquires an amount of a consumable consumed for printing in a first period; a carried-forward amount calculation section (41) that calculates a carried-forward amount of the consumable on a basis of the consumed amount and a base amount of the consumable for the first period; and a charge calculation section (42) that calculates an amount of money charged for printing on a basis of the carried-forward amount. The consumed amount acquisition section (40) acquires a second consumed amount that is an amount of the consumable consumed for printing in a second period that is posterior to the first period. The charge calculation section (42) calculates the amount of money charged for the second period on a basis of the second consumed amount, a second base amount that is a base amount of the consumable for the second period, and the carried-forward amount.

## Description

### BACKGROUND

### 1. Technical Field

The present invention relates to a charge calculation apparatus, method, and system.

### 2. Related Art

To a user who instructed for printing using a printer, an amount of money based on the printing is charged.

An image forming apparatus disclosed in JP-A-2009-286007 performs addition processing of adding a preset upper limit value for each predetermined period to the number of sheets left available for printing at the present moment, which is information written in an IC card, and overwrites this number of sheets left available with the result of the addition processing.

Proper execution of print-fee charging that is satisfactory to users is demanded. In the related art mentioned above, preparing, in advance, an individual IC card for each user for the purpose of charging, and storing information such as the number of sheets left available for printing for each user into an IC card, are burdensome.

### SUMMARY

An advantage of some aspects of the invention is to provide a charge calculation apparatus, method, and system for making it possible to perform, for the user, less burdensome and more proper charge calculation.

A charge calculation apparatus according to an aspect of the invention includes: a consumed amount acquisition section (consumed amount acquisition unit)¹ that is configured to acquire an amount of a consumable consumed for printing in a first period; a carried-forward amount calculation section (carried-forward amount calculation unit) that is configured to calculate a carried-forward amount of the consumable on a basis of the consumed amount and a base amount of the consumable for the first period; and a charge calculation section (charge calculation unit) that is configured to calculate an amount of money charged for printing on a basis of the carried-forward amount.

With the above configuration, the amount of money charged is calculated while taking the amount of a consumable carried forward from the first period into consideration, which will be helpful to the user. Moreover, unlike the related art mentioned earlier, the above configuration eliminates the burden of preparing, in advance, an individual IC card for each user for the purpose of charging and the burden of storing information such as the number of sheets left available for printing for each user into an IC card. An IC card (integrated circuit card) is also known as a chip card, prepaid card or smartcard.

In a preferred mode, the consumed amount acquisition section may be configured to acquire a second consumed amount that is an amount of the consumable consumed for printing in a second period that is posterior to the first period, and the charge calculation section may be configured to calculate the amount of money charged for the second period on a basis of the second consumed amount, a second base amount that is a base amount of the consumable for the second period, and the carried-forward amount.

With the above configuration, the amount of money charged for the second period is calculated while taking the amount of a consumable carried forward from the first period into consideration, which will be helpful to the user.

In a preferred mode, the charge calculation section may be configured to correct the second base amount by means of the carried-forward amount, and may be configured to calculate the amount of money charged for the second period on a basis of the corrected amount and the second consumed amount.

With the above configuration, it is possible to calculate the amount of money charged for the second period with accurate reflection of the amount of a consumable carried forward from the first period into it.

In a preferred mode, the charge calculation apparatus may further include a notifying section (notifying unit). The charge calculation section may be configured to calculate an amount, of the consumable, left available for consumption in the second period, hereinafter referred to as a left-available-for-consumption amount, on a basis of the second base amount, which is the base amount of the consumable for the second period, and on a basis of the carried-forward amount. The notifying section may be configured to notify the left-available-for-consumption amount to an outside.

The above configuration enables the user to know the amount of the consumable left available for consumption in the second period.

In a preferred mode, the notifying section may be configured to notify the carried-forward amount.

The above configuration enables the user to know how much the carried-forward amount of the consumable exists.

In a preferred mode, an expiration period may be set for the carried-forward amount and the charge calculation section may be configured to calculate, on a basis of the carried-forward amount within the expiration period, the amount of money charged.

With the above configuration, it is possible to avoid complicated charge calculation due to limitless carried-forward amount application or prompt the user to use the untapped carried-forward amount early.

In a preferred mode, in a second period that is posterior to the first period, a carried-forward amount application period, during which the amount of money charged is calculated on the basis of the carried-forward amount, and a carried-forward amount non-application period, during which the amount of money charged is not calculated on the basis of the carried-forward amount, may be set. The charge calculation section may be configured to calculate the amount of money charged for the carried-forward amount application period on the basis of the carried-forward amount, and not calculate the amount of money charged for the carried-forward amount non-application period on the basis of the carried-forward amount.

With the above configuration, by setting a time of year in which the amount of printing (the amount of a consumable consumed) is expected to increase as the carried-forward amount application period, it is possible to suppress the increase in the amount of money charged in such a "heavy-use" time of year.

In a preferred mode, the charge calculation section may be configured to acquire an additional consumable amount granted for free in accordance with a length of a print use period, and may calculate the amount of money charged while applying the additional consumable amount to the calculation.

With the above configuration, by practically applying a discount based on the length of a print use period to a user who is a long-term customer of the print service, it is possible to increase user satisfaction.

In a preferred mode, the charge calculation apparatus may be a printing apparatus connected to an external server, wherein the carried-forward amount calculation section may be configured to acquire the base amount from the server, and may be configured to calculate the carried-forward amount on a basis of the acquired base amount.

With the above configuration, the charge calculation apparatus is able to easily acquire the base amount that is to be used for calculating the carried-forward amount.

In a preferred mode, in a case where a change in the base amount is notified from the server, the carried-forward amount calculation section may be configured to calculate the carried-forward amount on a basis of the base amount after the change.

With the above configuration, by changing the base amount at the server side, it is possible to easily reflect the base amount after the change into the carried-forward amount calculation.

The technical concept of the invention can be embodied in various categories, not only as an apparatus. For example, another aspect of the invention that can be grasped is a method including processes executed by respective sections of a charge calculation apparatus (charge calculation method). An invention of a program for causing hardware (for example a computer or a processor²) to implement such a method and an invention of a non-transitory computer-readable storage medium storing such a program also hold.

Charge calculation of the present disclosure may be embodied as a system that includes a plurality of apparatuses. For example, it may be a charge calculation system that includes: a server and a printing apparatus capable of communicating with the server via a network. The printing apparatus may include a consumed amount acquisition section that is configured to acquire an amount of a consumable consumed for printing in a first period; and a carried-forward amount calculation section that is configured to calculate a carried-forward amount of the consumable on a basis of the consumed amount and a base amount of the consumable for the first period; and wherein the server includes a charge calculation section that is configured to acquire the carried-forward amount from the printing apparatus and to calculate an amount of money charged for printing on a basis of the carried-forward amount.

### BRIEF DESCRIPTION OF THE DRAWINGS

The invention will be described with reference to the accompanying drawings, wherein like numbers reference like elements.
Fig. 1 is a simplified diagram of the configuration of a system according to an exemplary embodiment.
Fig. 2 is a diagram illustrating various functions included in the system.
Fig. 3 is a flowchart illustrating periodic transmission processing for sending printer information.
Fig. 4 is a flowchart illustrating carried-forward amount calculation processing.
Fig. 5 is a flowchart illustrating charge calculation processing.
Fig. 6 is a diagram illustrating an example of a UI screen.

### DESCRIPTION OF EXEMPLARY EMBODIMENTS

With reference to the accompanying drawings, an exemplary embodiment of the present invention will now be explained. Each drawing shows a mere example for explaining the exemplary embodiment.

### 1. System Overview

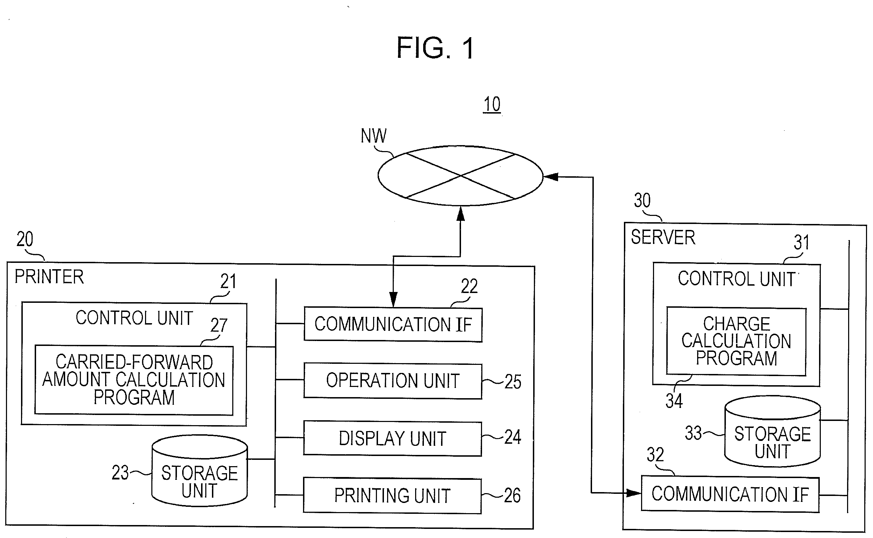

Fig. 1 is a simplified diagram of a system according to the present embodiment. The system 10 includes a printer 20, which is an example of a printing apparatus, and a server 30, which gathers information about the printer 20 and manages the system 10. Although only a single printer 20 is illustrated in Fig. 1, the system 10 may include a plurality of printers 20. The term "printer" means an apparatus that has at least a printer function. The printer 20 may be a multifunction printer that has a plurality of functions such as a scanner function and a facsimile function in addition to a printer function. The printer 20 may be a fixed installed printer, or a portable compact printer (mobile printer). The printer 20 may be referred to as image forming apparatus. In the present embodiment, a whole or a part of the system 10 may be referred to as charge calculation system. The printer 20 and/or the server 30 may be referred to as charge calculation apparatus. The charge calculation apparatus is configured to execute a charge calculation method.

Each printer 20 and the server 30 are capable of communicating with each other via a network NW. The network NW could encompass a local area network (LAN) and/or the Internet. The network NW may be a wired network and/or a wireless network. Though not illustrated, a terminal operated by an operator who belongs to a service provider (e.g. printer manufacturer) managing and operating the system 10 can be connected to the server 30. The terminal is, for example, a personal computer (PC). The operator is able to browse information held and processed by the server 30 via the terminal.

The printer 20 includes a control unit 21, a communication interface (IF) 22, a storage unit 23, a display unit 24, an operation unit 25, and a printing unit 26, etc. The control unit 21 comprises one or more ICs (Integrated Circuits)³ including CPU, ROM, RAM, etc. or other memory means, etc. In the control unit 21, the CPU performs arithmetic operation in accordance with firmware or programs stored in the ROM, etc. using the RAM, etc. as work area so as to control the behavior of each component of the printer 20. As a kind of the programs, a carried-forward amount calculation program 27 is installed in the control unit 21.

The communication IF 22 is a collective name of IF (interface) for performing external communication via the network NW, etc. in conformity with a predetermined communication standard. The storage unit 23 is a storage device such as a hard disk drive or a flash memory or a part of the control unit 21. The display unit 24 is a means for displaying visual information, for example, a liquid crystal display device (LCD) or an organic EL display device (OLED). The display unit 24 may include a display and a drive circuit for driving the display. The operation unit 25 is a means for operation input by a user, for example, a touch panel, physical buttons, and/or a keyboard. Needless to say, the display unit 24 may function as a touch panel. The display unit 24 and the operation unit 25 may be collectively referred to as operation panel.

The printing unit 26 is a mechanism that performs printing based on print data. For example, the printing unit 26 may be configured to perform ink-jet printing. The printing method used by the printing unit 26 is not limited to ink-jet printing. A variety of printing methods, for example, electrophotographic printing or laser printing, can be used. Since the structure of the printing unit 26 is known, a detailed explanation is not given.

The server 30 includes a control unit 31, a communication IF 32, and a storage unit 33, etc. The function of the server 30 is embodied by one or more information processing apparatuses. The control unit 31 comprises one or more ICs including CPU, ROM, RAM, etc. or other memory means, etc. In the control unit 31, the CPU performs arithmetic operation in accordance with programs stored in the ROM, etc. using the RAM, etc. as work area so as to control the behavior of the server 30. As a kind of the programs, a charge calculation program 34 is installed in the control unit 31. The foregoing description about the communication IF 22 and the storage unit 23 applies mutatis mutandis to the communication IF 32 and the storage unit 33. Information transmitted from each printer 20 is stored in the storage unit 33. The stored information can be used for calculating print charge for the each printer 20.

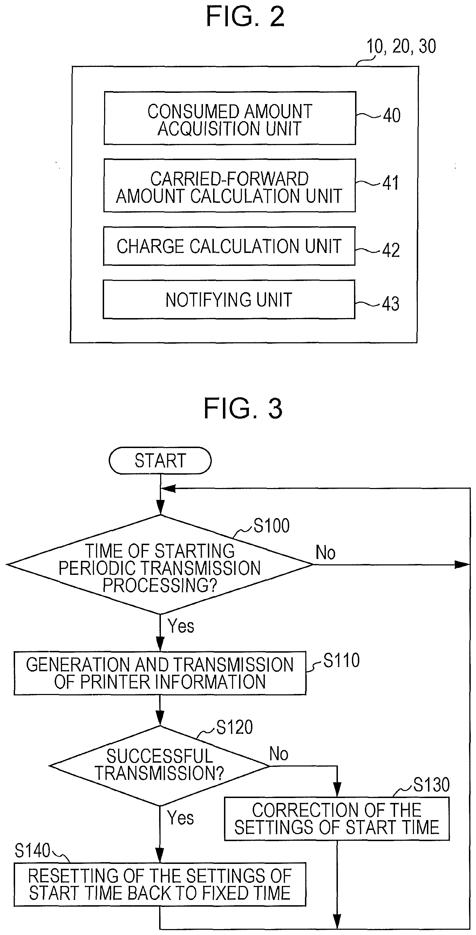

Fig. 2 illustrates functions implemented by the control unit 21 (printer 20) running the carried-forward amount calculation program 27 and functions implemented by the control unit 31 (server 30) running the charge calculation program 34 in the system 10. A consumed amount acquisition unit 40 (consumed amount acquisition section), which acquires information on the amount of a consumable consumed for printing in a first period, a carried-forward amount calculation unit 41 (carried-forward amount calculation section), which calculates the carried-forward amount (carryover) of a consumable on the basis of the consumed amount and the base amount of a consumable for the first period, a charge calculation unit 42 (charge calculation section), which calculates the amount of money charged for printing on the basis of the carried-forward amount, and a notifying unit 43 (notifying section), which notifies the carried-forward amount to the outside, are illustrated herein for implementing various functions.

For example, the functions of the consumed amount acquisition unit 40, the carried-forward amount calculation unit 41, and the notifying unit 43 are implemented by the printer 20, and the function of the charge calculation unit 42 is implemented by the server 30. However, various modifications can be applied to the division of roles between the printer 20 and the server 30. For example, the function of the charge calculation unit 42 may also be implemented by the printer 20. Alternatively, in addition to the function of the charge calculation unit 42, a whole or a part of the functions of the consumed amount acquisition unit 40, the carried-forward amount calculation unit 41, and the notifying unit 43 may be implemented by the server 30. Therefore, the terms used herein, including "carried-forward amount calculation program 27" and "charge calculation program 34", are names given to programs merely for convenience of description. The functions offered by the programs 27, 34 shall not be construed as being limited to the names of the programs 27, 34.

### 2. Periodic Transmission of Printer Information

Before an explanation of charge calculation, periodic transmission processing for sending printer information by the printer 20 will now be explained. In the present embodiment, the printer 20 transmits its own information (printer information), which is information regarding the printer 20, to the server 30 periodically at a predetermined timing. The printer information includes consumable information in the printer 20, device identification information for identifying the printer 20, time information indicating the time at which the printer information was generated by the printer 20, etc. The consumable means an article consumed for printing performed by the printer 20 (printing unit 26), for example, ink, toner, a print medium such as paper, etc. The consumable information could contain information about, for example, the cumulative number of sheets printed by the printing unit 26, the amount of ink left in an ink cartridge(s) (or an ink bottle or an ink pack) of the printing unit 26, the amount of ink consumed such as the number of color-by-color shots from nozzles, ink cartridge replacement history, the amount of toner left in the printing unit 26, the amount of toner consumed, toner cartridge replacement history, etc.

On the basis of the output of various kinds of sensor or counter of the printing unit 26, the control unit 21 of the printer 20 writes the most-recent-update (latest) consumable information on a real-time basis into the storage unit 23. Any unique information that enables each individual printer 20 to be identified in the system 10 suffices as the device identification information. The device identification information is, for example, the serial number of the printer 20. The printer information may contain error information, etc. for notification of an error that occurred at the printer 20.

Fig. 3 is a flowchart illustrating periodic transmission processing performed by the control unit 21. In the illustration of Fig. 3, it is assumed that the control unit 21 transmits its own printer information once a day at a predetermined time (at the fixed time). A user is able to set the fixed time at a convenient time in consideration of the user's business needs, etc. The settings of the fixed time could differ from one printer 20 to another in the system 10.

The control unit 21 judges whether the time of starting periodic transmission processing has come or not (step S100). The settings of the time of starting periodic transmission processing are stored in the storage unit 23. The control unit 21judges as "Yes" when the current time becomes equal to the time of starting periodic transmission processing, and the process proceeds to a step S110. The time of starting periodic transmission processing is, basically, the fixed time set as described above. However, it could be an "after-correction" time, which has been corrected in a step S130 described later.

In a step S110, the control unit 21 generates printer information, and transmits the generated printer information to the server 30 via the network NW. Specifically, the control unit 21 acquires the most-recent-update consumable information written in the storage unit 23, generates printer information containing the acquired consumable information, its own device identification information (about the printer 20), and time information indicating the time when the consumable information was acquired (the time when the printer information was generated), and transmits the printer information to the server 30.

In a step S120, the control unit 21 judges whether the transmission of the printer information in the step S110 executed most recently is successful or not. The control unit 21judges that the transmission of the printer information is successful if, as a response to the printer information transmitted, an acknowledgment indicating the receipt of the printer information is received from the server 30 (for example, within a predetermined time from the transmission of the printer information). The process proceeds to a step S140 if it is judged that the transmission of the printer information is successful ("Yes" in the step S120). The process proceeds to a step S130 if it is judged that the transmission of the printer information is unsuccessful ("No" in the step S120).

In the step S130, the control unit 21 corrects the settings of the time of starting periodic transmission processing. For example, the control unit 21 sets one hour after the currently set time of starting periodic transmission processing as the corrected time of starting periodic transmission processing. The process returns to the step S100, that is, judgment, after the step S130. Therefore, in the step S110 after going through the steps S130 and S100, it follows that the transmission of the printer information is retried at a point in time later than the fixed time.

The time added to the set start time in the step S130 is not limited to one hour. It may be for example within a range of ten minutes, five hours, or forty eight hours. However, if the transmission of the printer information were retried after the next periodic transmission processing, the retry would be meaningless. Therefore, conditions that the retry be executed before the next periodic transmission processing have to be met.

For the retry of the printer information transmission, the control unit 21 may generate (gather) printer information again and transmit it to the server 30. Alternatively, the control unit 21 may transmit the printer information that was generated in the recently-executed periodic transmission processing (step S110) to the server 30 without generating it again. However, since the consumable information, etc. included in the printer information changes from moment to moment, in a case where the first priority is the transmission of the printer information at the fixed time (the time of starting periodic transmission processing) as in the closing date for charging, it is preferred that the printer information that was generated in the recently-executed periodic transmission processing be transmitted.

In the step S140, the control unit 21 resets the settings of the time of starting periodic transmission processing back to the fixed time. Specifically, in a case where the currently set time of starting periodic transmission processing is not the fixed time, the control unit 21 puts the settings back to the original. If the currently set time of starting periodic transmission processing is the fixed time, nothing is substantially done in the step S140. The process returns to the step S100, that is, judgment, after the step S140. It therefore follows that the process proceeds from the step S110 from the judgment in the step S100 at the fixed time of the next day. Each printer 20 included in the system 10 repeats the processing illustrated in Fig. 3. Therefore, each printer 20 transmits its own printer information to the server 30 once a day almost at periodic timing. At the server 30, the printer information received from each printer 20 is stored into the storage unit 33.

### 3. Charge Calculation Taking the Carried-forward Amount of Consumable into Account

Next, charge calculation taking the carried-forward amount of a consumable into consideration will be explained.

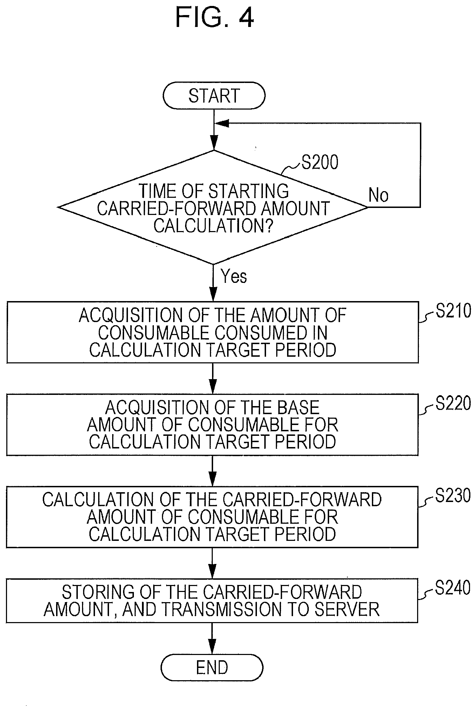

Fig. 4 is a flowchart illustrating carried-forward amount calculation processing necessary for charge calculation. In the description below, a case where carried-forward amount calculation processing is performed by the control unit 21 of the printer 20 is taken as an example.

The content of an agreement made in advance between the user of the printer 20 and the service provider regarding the use of the printer 20 is stored in the storage unit 23 of the printer 20. The content of the agreement includes, for example, settings about the base number of print sheets per unit time period for charge calculation and about the closing date for performing charge calculation and performing calculation of the carried-forward amount of a consumable (performs closing-date processing). In the present embodiment, the unit time period for charge calculation is assumed to be one month. That is, it is preferred that charge calculation and carried-forward amount calculation are performed monthly (preferably on the closing date of each month). The closing date is, for example, the last date of each month. The base number of print sheets is a kind of upper limit that specifies the tolerable amount of consumption of a consumable (in this example, a print medium) per unit time period (one month).

The control unit 21 judges whether the time of starting carried-forward amount calculation processing has come or not (step S200). The control unit 21 is able to recognize the closing date on the basis of the stored content of the agreement. Therefore, if the current time is the predetermined time of the closing date (e.g., 23:59h) or the time of the end of the closing date (00:00h of the day after the closing date), the control unit 21 judges that the time of starting carried-forward amount calculation processing for the month to which the closing date belongs (calculation target period) has come ("Yes" in a step S200), and the process proceeds to a step S210. For example, if the calculation target period for carried-forward amount calculation is January 2017, a predetermined time before or after the end of January 31, 2017 is the timing for performing carried-forward amount calculation for January 2017.

In the step S210, the control unit 21 (consumed amount acquisition unit 40) acquires information on the amount of a consumable consumed for printing in the calculation target period. As described earlier, consumable information is stored in the storage unit 23. In addition to the most-recent-update consumable information, the control unit 21 has caused the storage unit 23 to store the cumulative number of printed sheets at the point in time of execution of carried-forward amount calculation corresponding to the last closing date as "the cumulative number of printed sheets up to the closing date for the last calculation target period."

Therefore, the control unit 21 refers to each of these pieces of information stored in the storage unit 23 to know the number of printed sheets for the calculation target period as the difference between the most-recent-update cumulative number of printed sheets and the cumulative number of printed sheets up to the closing date for the last calculation target period. The number of printed sheets for the calculation target period is acquired in this way, and this number indicates the amount of a consumable consumed for printing in the calculation target period.

In a step S220, the control unit 21 (carried-forward amount calculation unit 41) acquires information on the base amount, for consumption, of a consumable for the calculation target period. In this example, the control unit 21 reads out the base number of print sheets that is a part of the content of the agreement stored in the storage unit 23. The order of execution of processing in the step S210 and processing in the step S220 may be reversed. Alternatively, the processing in the step S210 and the processing in the step S220 may be executed substantially at the same time.

The content of the agreement regarding the closing date and the base amount of a consumable may be notified to each printer 20 from the server 30 via the network NW. The content of the agreement made in advance between the user of each individual printer 20 and the service provider is, for example, stored in the storage unit 33 of the server 30 in association with the device identification information of each printer 20. The content of the agreement could vary from one user (printer 20) to another. The control unit 31 of the server 30 notifies the printer 20 of the content of the agreement corresponding to the printer 20 by, for example, adding the content of the agreement stored in association with the device identification information of the printer 20 in the storage unit 33 to a response to the periodic transmission (step S110) of printer information by the printer 20. At the printer side 20, the content of the agreement transmitted in this way is stored into the storage unit 23 so that information on the closing date and the base amount of a consumable can be read out when needed. That is, the carried-forward amount calculation unit 41 is capable of acquiring information on the base amount externally from the server 30 via the network NW and using the acquired base amount for calculation of the carried-forward amount of a consumable.

In a step S230, the control unit 21 (carried-forward amount calculation unit 41) calculates the carried-forward amount of a consumable for the calculation target period on the basis of the consumed amount of a consumable acquired in the step 210 and the base amount of a consumable acquired in the step 220. Specifically, the carried-forward amount of a consumable for the calculation target period (the carried-forward number of print sheets) is calculated by subtracting the consumed amount of a consumable acquired in the step 210 from the base amount of a consumable acquired in the step 220. If the consumed amount of a consumable acquired in the step 210 is equal to or greater than the base amount of a consumable acquired in the step 220, the carried-forward amount is zero.

In a step S240, the control unit 21 causes the storage unit 23 to store the carried-forward amount of a consumable for the calculation target period (calculated in the step S230) together with the information for identifying the calculation target period (e.g., January 2017). In addition, the control unit 21 transmits the carried-forward amount of a consumable for the calculation target period (calculated in the step S230) together with the information for identifying the calculation target period and the device identification information to the server 30 via the network NW. The carried-forward amount calculation by the printer 20 ends after the above processing. The control unit 31 of the server 30 causes the storage unit 33 to store the carried-forward amount of a consumable received from the printer 20 together with the information for identifying the calculation target period and the device identification information.

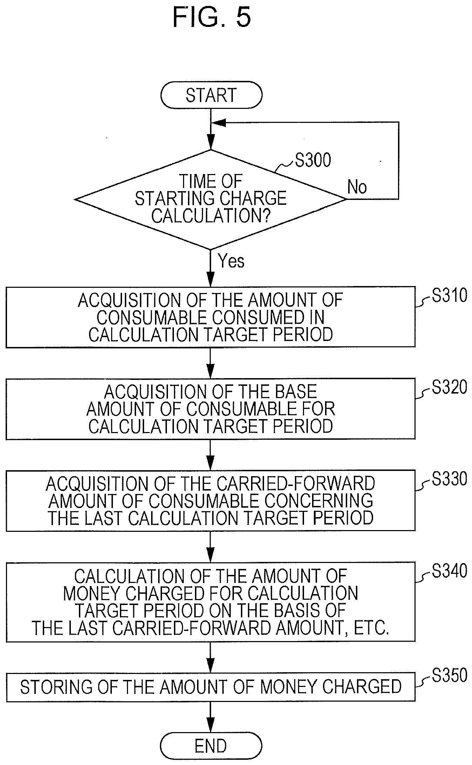

Fig. 5 is a flowchart illustrating charge calculation processing. In the description below, a case where the control unit 31 of the server 30 performs charge calculation processing regarding a certain printer 20 (target printer 20) is taken as an example. Needless to say, every printer included in the system 10 (the printer 20 of the user who made the agreement with the service provider) could be the target printer 20. Therefore, the control unit 31 is capable of performing charge calculation processing regarding a plurality of printers 20 concurrently.

The control unit 31 (charge calculation unit 42) judges whether the time of starting charge calculation processing regarding the target printer 20 has come or not (step S300). The control unit 31 is able to recognize the closing date on the basis of the content of the agreement stored in the storage unit 33 regarding the target printer 20. Therefore, if the current time is the predetermined time of the closing date (e.g., 23:59) or the time of the end of the closing date (0:00 of the day after the closing date), the control unit 31 judges that the time of starting charge calculation processing for the month to which the closing date belongs (calculation target period) has come ("Yes" in a step S300), and the process proceeds to a step S310. For example, if the calculation target period for charge calculation is February 2017, a predetermined time before or after the end of February 28, 2017 is the timing for performing charge calculation for February 2017.

In the step S310, the control unit 31 (charge calculation unit 42) acquires information on the amount of a consumable consumed by the target printer 20 for printing in the calculation target period. As described earlier, printer information is transmitted periodically from each printer 20 to the server 30, and the printer information (consumable information, etc.) is stored into the storage unit 33 for each printer 20. Therefore, the control unit 31 refers to the information stored in the storage unit 33 and calculates, regarding the target printer 20, the difference between the most-recent-update cumulative number of printed sheets and the cumulative number of printed sheets at the point in time of execution of charge calculation corresponding to the last closing date. This difference is acquired as the number of printed sheets for the calculation target period, that is, as the amount of a consumable consumed by the target printer 20 for printing in the calculation target period.

In a step S320, the control unit 31 (charge calculation unit 42) acquires information on the base amount, regarding the target printer 20, of a consumable for the calculation target period. In this example, the control unit 31 reads out the base number of print sheets that is a part of, regarding the target printer 20, the content of the agreement stored in the storage unit 33.

In a step S330, the control unit 31 (charge calculation unit 42) acquires information on the carried-forward amount of a consumable concerning the last calculation target period regarding the target printer 20 (the last carried-forward amount). As described earlier, information on the carried-forward amount of a consumable received from each printer 20 is stored in the storage unit 33 together with the information for identifying the calculation target period and the device identification information. Therefore, the control unit 31 reads, out of the storage unit 33, the information on the carried-forward amount of a consumable concerning the last calculation target period regarding the target printer 20. For example, if the calculation target period for charge calculation is February 2017, the control unit 31 reads, out of the storage unit 33, the information on the carried-forward amount of a consumable calculated concerning the last month (January 2017) regarding the target printer 20 as the last carried-forward amount. In other words, the carried-forward amount of a consumable calculated concerning a certain month as an example of the calculation target period regarding the target printer 20 is to be taken into consideration when the server 30 performs charge calculation processing concerning, as an example of the calculation target period, the next month that follows this certain month. The order of execution of processing in the steps S310, S320, and S330 is not limited. The processing in these steps may be executed substantially at the same time.

In a step S340, the control unit 31 (charge calculation unit 42) calculates the amount of money charged for printing by the target printer 20 for the calculation target period on the basis of the last carried-forward amount acquired in the step S330, etc. In this example, on the basis of the consumed amount of a consumable acquired in the step S310, the base amount of a consumable acquired in the step S320, and the last carried-forward amount acquired in the step S330, the control unit 31 calculates the amount of money charged.

There are various rules that can be applied to calculation of the amount of money charged. For example, in a case where the consumed amount of a consumable is equal to or less than the base amount of a consumable, a fixed amount of money agreed in advance is outputted as the amount of money charged. However, in this case, the control unit 31 performs correction by adding the last carried-forward amount to the base amount of a consumable, and determines the amount of money charged on the basis of the corrected base amount and the consumed amount of a consumable. If the last carried-forward amount is zero, this correction is skipped. That is, in a case where the amount of a consumable consumed in the calculation target period is equal to or less than the corrected base amount, the agreed fixed amount of money is outputted as the amount of money charged for the calculation target period. In a case where the amount of a consumable consumed in the calculation target period is in excess of the corrected base amount, the control unit 31 adds an extra amount of money that is proportional to the excess consumption (excess number of printed sheets) over the corrected base amount to the agreed fixed amount of money and outputs the sum as the amount of money charged for the calculation target period. Alternatively, in a case where the amount of a consumable consumed in the calculation target period is in excess of the corrected base amount, a more-expensive fixed amount of money agreed in advance may be outputted as the amount of money charged for the calculation target period.

In a step S350, the control unit 31 causes the storage unit 33 to store the charge calculated in the step S340 together with the information for identifying the calculation target period in association with the device identification information of the target printer 20. The charge calculation by the server 30 ends after the above processing. After that, the service provider notifies the user of the target printer 20 of the amount of money charged for the calculation target period, which has been calculated as described above. Then, payment for the bill is made using some (known) means.

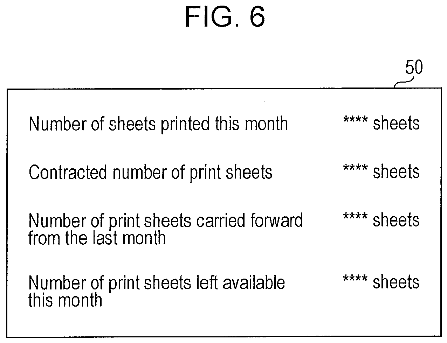

Fig. 6 illustrates an example of a user interface (Ul) screen 50 displayed on the display unit 24 of the printer 20. The control unit 21 (notifying unit 43) generates the illustrated UI screen 50 and causes the display unit 24 to display it. The UI screen 50 shows a plurality of display items such as, for example, "Number of sheets printed this month", "Contracted number of print sheets", "Number of print sheets carried forward from the last month", "Number of print sheets left available this month", and shows a specific numerical value (number of sheets) for each of these items. "Number of sheets printed this month" means the number of sheets that have already been printed by the printing unit 26 up to the present moment in the month to which the present date of display of the UI screen 50 belongs. The control unit 21 calculates the difference between the most-recent-update cumulative number of printed sheets stored in the storage unit 23 and the cumulative number of printed sheets up to the closest previous closing date stored therein, and causes the display unit 24 to display the difference as "Number of sheets printed this month."

"Contracted number of print sheets" corresponds to the base amount of a consumable (base number of print sheets). The control unit 21 causes the display unit 24 to display, as "Contracted number of print sheets", the base number of print sheets that is a part of the content of the agreement stored in the storage unit 23. "Number of print sheets carried forward from the last month" corresponds to the carried-forward amount of a consumable for the last calculation target period. That is, the control unit 21 reads, out of the storage unit 23, the carried-forward amount of a consumable that was calculated through the execution of carried-forward amount calculation corresponding to the closest previous closing date, and causes the display unit 24 to display it as "Number of print sheets carried forward from the last month."

"Number of print sheets left available this month" is a numerical value that indicates how many sheets are left available for printing this month within a range in which the amount of money charged for printing this month does not exceed the agreed fixed amount of money. The control unit 21 causes the display unit 24 to display, as "Number of print sheets left available this month", a value calculated by adding "Number of print sheets carried forward from the last month" to "Contracted number of print sheets" and by subtracting "Number of sheets printed this month" therefrom. "Number of print sheets left available this month" corresponds to an amount, of a consumable, left available for consumption in a second period, wherein this amount is calculated on the basis of the amount of a consumable consumed for printing in the second period (this month) that is posterior to a first period (the last month) (second consumed amount), the base amount of a consumable for the second period (second base amount), and the carried-forward amount. By causing the display unit 24 to display the UI screen 50 that contains these items and values, the control unit 21 performs external notification, that is, lets the user know the amount carried forward from the last month and the number of print sheets left available this month, thereby helping the user in improving print work efficiency and reducing cost. The method of notification by the control unit 21 (notifying unit 43) is not limited to display. Speech output from non-illustrated speakers may be used for the notification. The "left-available-for-consumption" amount of a consumable is not limited to the value calculated by subtracting the number of sheets printed this month from the sum of the contracted number of print sheets and the number of print sheets carried forward from the last month (first left-available-for-consumption amount of a consumable). For example, the left-available-for-consumption amount of a consumable may be a value calculated by adding a predetermined amount to, or subtracting a predetermined amount from, the first left-available-for-consumption amount.

The scope of the embodiment is not limited to the above-described modes and examples. For example, the printer 20 may execute charge calculation in addition to carried-forward amount calculation (the printer 20 may function as a charge calculation apparatus alone). In this case, the control unit 21 performs the processing in the steps S330 and S340 in Fig. 5 in addition to the processing in Fig. 4. In the step S330, the control unit 21 acquires information on the last carried-forward amount stored in the storage unit 23. Then, in the step S340, the control unit 21 calculates the amount of money charged for printing for the calculation target period on the basis of the last carried-forward amount acquired in the step S330, etc. That is, on the basis of the consumed amount of a consumable acquired in the step S210, the base amount of a consumable acquired in the step S220, and the last carried-forward amount acquired in the step S330, the control unit 21 calculates the amount of money charged. In the step S240, the control unit 21 causes the storage unit 23 to store the carried-forward amount of a consumable calculated in the step S230 and the charge calculated in the step S340, and transmits the charge to the server 30. The carried-forward amount of a consumable calculated in the step S230 will be used as the last carried-forward amount when charge calculation corresponding to the next closing date is performed.

In the above-described modified configuration in which the printer 20 performs charge calculation, carried-forward amount calculation may be performed by the server 30 instead of the printer 20. Specifically, the control unit 31 performs processing in the step S230 of Fig. 4 that is subsequent to the steps S300 to S320 of Fig. 5. In this case, in the step S230, the control unit 31 calculates the carried-forward amount of a consumable regarding the target printer 20 on the basis of the consumed amount of a consumable acquired in the step 310 and the base amount of a consumable acquired in the step 320. The control unit 31 transmits the carried-forward amount of a consumable calculated in the step S230 to the target printer 20. At the printer side 20, the control unit 21 causes the storage unit 23 to store the carried-forward amount of a consumable received from the server 30, and causes the display unit 24 to display it.

Alternatively, the server 30 may execute carried-forward amount calculation in addition to charge calculation (the server 30 may function as a charge calculation apparatus alone). In this case, the control unit 31 performs the processing in the step S230 in Fig. 4 in addition to the processing in Fig. 5. In the step S350, the control unit 31 causes the storage unit 33 to store the carried-forward amount of a consumable calculated in the step S230 and causes a predetermined display unit (e.g., the display unit 24 of the printer 20) to display it.

The terms "first period" and "second period" are used in the present disclosure merely for the purpose of distinguishing one period from another. For example, if the calculation target period for carried-forward amount calculation (first period) is a certain month, any future month that is posterior to this certain month could be the second period. In reversed definition, if the calculation target period for charge calculation (second period) is a certain month, any past month that is anterior to this certain month could be the first period. As a matter of course, a certain month (e.g., January 2017) may be referred to as the first period, or the second period. That is, if a past month (e.g., December 2016) that is anterior to this certain month is referred to as the first period, this certain month is one of examples of the second period. If a future month (e.g., February 2017) that is posterior to this certain month is referred to as the second period, this certain month is one of examples of the first period. The ordinal numbers "first" and "second" prefixed to the base amount, consumed amount, etc. of a consumable are also for the purpose of showing correspondences to the respective (first, second) periods.

As described above, a charge calculation apparatus and a charge calculation system according to the present embodiment include the consumed amount acquisition unit 40, which acquires information on the amount of a consumable consumed for printing in a first period, the carried-forward amount calculation unit 41, which calculates the carried-forward amount of a consumable on the basis of the consumed amount and the base amount of a consumable for the first period, and the charge calculation unit 42, which calculates the amount of money charged for printing on the basis of the carried-forward amount. With the above configuration, the amount of money charged is calculated while taking the amount of a consumable carried forward from the first period into consideration. Therefore, it is easier to suppress an increase in the amount of money charged, which is beneficial to the user. Moreover, unlike the related art mentioned earlier, the above configuration eliminates the burden of preparing, in advance, an individual IC card for each user for the purpose of charging and the burden of storing information such as the number of sheets left available for printing for each user into an IC card.

As described above, the content of the agreement made in advance between the user of the printer 20 and the service provider is stored in the server 30, and the content of the agreement is transmitted from the server 30 to the printer 20. With the above configuration, it is possible to notify the printer 20 of a change in the content of the agreement, for example, a change in the base amount of a consumable. For example, if it is agreed to change the base amount of a consumable regarding the printer 20 of a user as a result of negotiation between the user and the service provider, a part of the content of the agreement (the base amount of a consumable) stored in association with the device identification number of this printer 20 in the storage unit 33 of the server 30 is changed. In a case where there is such a change in the content of the agreement, the control unit 31 sends a notification about information after the change (the base amount after the change) to this printer 20 via the network NW. The control unit 21 of the printer 20 having received the notification about the base amount after the change is able to calculate the carried-forward amount of a consumable by using the base amount after the change (steps S220 and S230 in Fig. 4). Needless to mention, if the base amount of a consumable regarding the printer 20 is changed as described herein, the server 30 calculates print charge for this printer 20 by using the base amount after the change (steps S320 and S340 in Fig. 5).

With regard to the carried-forward amount of a consumable, there are two concepts concerning the setting of an expiration period: one is to set an expiration period, and the other is not to set any expiration period. As will be understood from the foregoing description, the carried-forward amount of a consumable calculated concerning a certain month as an example of the calculation target period is, basically, to be taken into consideration when charge calculation concerning, as an example of the calculation target period, the next month that follows this certain month is performed. If the consumed amount of a consumable in the next month is less than the corrected base amount, which is the amount after correction using the carried-forward amount, a whole or a part of the carried-forward amount remains unused. If no expiration period is imposed on the carried-forward amount, once it occurs, it is carried forward to be taken into consideration in charge calculation in the month after the next, and the subsequent months, until depletion to zero.

In contrast, if an expiration period is imposed on the carried-forward amount, the term of carryover is limited. For example, a charge calculation apparatus (system) may restrictively apply the carried-forward amount of a consumable, only to charge calculation for the next calculation target period that follows the carryover-occurring calculation target period. That is, an embodiment that will be understood here is to set an expiration period for the carryover mentioned above and to cause the charge calculation unit 42 to calculate the charge on the basis of non-expired carryover. Specifically, for example, the carried-forward amount of a consumable calculated concerning January 2017 as the calculation target period is applied only to charge calculation concerning February 2017 as the calculation target period. The remainder of the amount of a consumable carried forward from January 2017 is not applied to charge calculation in March 2017 even if the amount of a consumable consumed in February 2017 is less than the corrected base amount, which is the amount after correction using this carried-forward amount.

Whether to set an expiration period regarding the carried-forward amount of a consumable or not may be comprehended in terms of difference in the method of carried-forward amount calculation. If the carried-forward amount of a consumable for a certain period (calculation target period) is always calculated by subtracting the amount of a consumable consumed in this certain period from the base amount of a consumable (contracted number of print sheets), it follows that, practically, the end of the expiration period regarding the carried-forward amount is the next month. If the carried-forward amount of a consumable for a certain period (calculation target period) is calculated by subtracting the amount of a consumable consumed in this certain period from the sum (corrected base amount) of the base amount of a consumable (contracted number of print sheets) and the last carried-forward amount, it follows that no expiration period regarding the carried-forward amount is set.

For example, suppose that the base amount of a consumable (contracted number of print sheets) is 1,000 sheets, and the number of sheets printed by the printer 20 in January 2017 is 800 sheets. The amount of a consumable (print medium) carried forward from January 2017 is 200 sheets. The amount of money charged the next month, that is, February 2017, is the aforementioned fixed amount of money if the number of sheets printed in February 2017 is not in excess of the sum (corrected base amount), 1,200 sheets, of the base amount, 1,000 sheets, and the carried-forward amount, 200 sheets. Suppose that the number of sheets printed in February 2017 is 1,100 sheets. The remainder of the amount of a consumable carried forward from January 2017 is the difference between 1,200 sheets and 1,100 sheets, that is, 100 sheets. If the carried-forward amount calculation unit 41 applies a formula "the base amount minus the number of sheets printed in February 2017" to the calculation of the amount of a consumable carried forward from February 2017, it follows that nothing is carried forward from February 2017 (zero). That is, by ignoring the amount of a consumable carried forward from January 2017 when computing the amount of a consumable carried forward from February 2017, it is possible to avoid the expired amount of a consumable carried forward from January 2017 from affecting the calculation in the month after the next, and the subsequent months. If the carried-forward amount calculation unit 41 applies a formula "the base amount corrected by taking the amount of a consumable carried forward from January 2017 into consideration, that is, the corrected base amount (1,200 sheets), minus the number of sheets printed in February 2017 (1,100 sheets)" to the calculation of the amount of a consumable carried forward from February 2017, itfollows that 100 sheets are carried forward from February 2017. That is, by considering the amount of a consumable carried forward from January 2017 when computing the amount of a consumable carried forward from February 2017, it is possible to allow the amount of a consumable carried forward from January 2017 to further affect the calculation in the month after the next, and the subsequent months.

### 4. Variation Examples

The scope of the embodiment is not limited to the foregoing description. In the description below, some examples of a variety of variations encompassed in the embodiment are explained. First Variation Example

Depending on the nature of user's business, etc., the number of sheets printed could vary from one season/time of year to another in an unbalanced manner. For example, a possible situation is that the number of sheets printed in a particular season/time of year (e.g., the end of year) is expected to be significantly greater than that of other seasons, etc. In such a situation, the user desires to minimize the increase in the amount of money charged in the "heavy-use" time of year, in which many sheets are expected to be printed. To meet such needs, a charge calculation apparatus (system) may cumulate the carried-forward amount of a consumable regarding the target printer 20 over a plurality of periods and then may apply the cumulative carried-forward amount to charge calculation regarding the target printer 20 concerning a preset particular period.

For example, a charge calculation apparatus (system) accepts an offer made by the user of the printer 20 and sets December of every year, in which many sheets are expected to be printed, as a particular period that is the target of application of the carried-forward amount of a consumable under the contract. In such a case, in accordance with the agreement, the carried-forward amount calculation unit 41 performs carried-forward amount calculation corresponding to the closing date of every month and cumulates the carried-forward amount calculated for every month, except during the particular period (every month in a period excluding the particular period, for example, every month from January inclusive to November inclusive). Then, the charge calculation unit 42 performs charge calculation corresponding to the closing date of the agreed particular period (December), wherein base amount correction is performed by adding the cumulative carried-forward amount of a consumable to the base amount, and wherein the amount of money charged is calculated on the basis of comparison of the corrected base amount and the amount of a consumable consumed in the particular period. That is, the charge calculation apparatus sets, in a second period that is posterior to a first period, a particular second period (carried-forward amount application period) that is the target of application of the carried-forward amount, and the charge calculation unit 42 calculates the amount of money charged for the particular second period on the basis of the carried-forward amount. In this specification, the period during which the charge calculation unit 42 does not calculate the charge on the basis of the carried-forward amount (the period excluding the particular period) may be referred to as carried-forward amount non-application period. With this variation example, a user is able to effectively suppress an increase in the amount of money charged in a particular season/time of year in which it is expected that the number of sheets printed will be significantly greater than that of other seasons, etc., thereby achieving print cost stability.

### Second Variation Example

A charge calculation apparatus (system) may give an advantageous treatment to a user on the basis of the period of use of print service by the printer 20, that is, the length of the contract with the service provider. In this variation, the charge calculation unit 42 counts, for each printer 20, the number of years (or months) of contract period continuation, and sets a bonus point corresponding to the length of the contract for the printer 20 each in accordance with a predetermined point-granting rule. The bonus point is stored into the storage unit 23 or the storage unit 33. The bonus is a right to use a predetermined amount of a consumable for free of charge. The unit of the bonus is, for example, the number of print sheets. The bonus point is an example of an additional consumable amount granted for free according to an aspect of the invention.

For charge calculation regarding the printer 20 for a certain period (calculation target period), the charge calculation unit 42 acquires a bonus point corresponding to this printer 20 from the storage unit 23 or the storage unit 33, and calculates the amount of money charged, with the acquired bonus point applied thereto. Specifically, the charge calculation unit 42 performs base amount correction by adding the carried-forward amount to the base amount of a consumable and further adding the bonus point (the number of print sheets) thereto, and calculates the amount of money charged on the basis of comparison of the corrected base amount and the number of sheets printed by this printer 20 in this certain period. In this variation example, the longer the contract period of the user, the greater advantage granted in terms of charge. This works as an incentive for many users to maintain the contract for a long period.

### Third Variation Example

The information presented to a user by the display unit 24 of the printer 20 (for example, the UI screen 50) may be displayed on a display of a non-illustrated terminal such as a PC connected to the printer 20. For example, the printer 20 functions as a kind of server on the network NW and presents a webpage for displaying various kinds of information. An external PC presents the UI screen 50, etc. to the user via its own display by accessing the webpage by using the function of a browser installed. Various processing explained in the foregoing description as processing executed by the printer 20, including but not limited to periodic transmission of printer information to the server 30, carried-forward amount calculation, and charge calculation, may be executed by the external PC capable of establishing a connection to the printer 20 and acquiring the printer information, etc. therefrom.

### Fourth Variation Example

The printing unit 26 of the printer 20 is capable of executing monochrome printing and color printing. Therefore, the number of sheets printed by the printer 20 in the foregoing description can be understood for each of monochrome printing and color printing. That is, in the periodic transmission of printer information, as a kind of consumable information, the cumulative number of monochrome-print sheets and the cumulative number of color-print sheets printed by the printer 20 are transmitted to the server 30. The charge calculation apparatus (system) sets all of the base, consumed, and carried-forward amount of a consumable with monochrome/color separation, calculates the amount of money charged for monochrome printing for the calculation target period and the amount of money charged for color printing for the calculation target period, and bills the sum of the monochrome charge and the color charge to the user.

### Fifth Variation Example

In the foregoing description, a case where charge calculation based on the number of sheets printed by the printer 20 is taken as an example. However, the consumable used for printing by the printer 20 is not limited to sheets. Ink and toner are other kinds of consumable. Therefore, a charge calculation apparatus (or method or system) may calculate the amount of ink or toner consumed for printing by the printer 20, may set the base amount for ink consumption or toner consumption, and may calculate the carried-forward amount of ink or toner on the basis of comparison of the base amount and the consumed amount thereof. Then, the charge calculation apparatus (system) may apply the calculated carried-forward amount to future charge calculation (charge calculation based on the ink consumption or the toner consumption), thereby offering a cost-advantageous environment to the user.

The control unit 21 (processor) according to the exemplary embodiment corresponds to one or more integrated circuits. The control unit 21 includes, for example, one or more CPUs, one or more ASICs (Application-Specific Integrated Circuits), or a combination of them.

The control unit 31 (processor) according to the exemplary embodiment corresponds to one or more integrated circuits. The control unit 31 includes, for example, one or more CPUs, one or more ASICs, or a combination of them.

The entire disclosure of Japanese Patent Application No.2017-050919, filed March 16th, 2017 is expressly incorporated by reference herein.

## Claims

1. A charge calculation apparatus (20, 30), comprising:
a consumed amount acquisition section (40) configured to acquire an amount of a consumable consumed for printing in a first period;
a carried-forward amount calculation section (41) configured to calculate a carried-forward amount of the consumable on a basis of the consumed amount and a base amount of the consumable for the first period; and
a charge calculation section (42) configured to calculate an amount of money charged for printing on a basis of the carried-forward amount.

2. The charge calculation apparatus (20, 30) according to claim 1,
wherein the consumed amount acquisition section (40) is configured to acquire a second consumed amount that is an amount of the consumable consumed for printing in a second period that is posterior to the first period; and
wherein the charge calculation section (42) is configured to calculate the amount of money charged for the second period on a basis of the second consumed amount, a second base amount that is a base amount of the consumable for the second period, and the carried-forward amount.

3. The charge calculation apparatus (20, 30) according to claim 2,
wherein the charge calculation section (42) is configured to correct the second base amount by means of the carried-forward amount, and to calculate the amount of money charged for the second period on a basis of the corrected amount and the second consumed amount.

4. The charge calculation apparatus (20, 30) according to claim 2, further comprising:
a notifying section (43);
wherein the charge calculation section (42) is configured to calculate an amount, of the consumable, left available for consumption in the second period, hereinafter referred to as a left-available-for-consumption amount, on a basis of the second base amount, which is the base amount of the consumable for the second period, and on a basis of the carried-forward amount; and
wherein the notifying section (43) is configured to notify the left-available-for-consumption amount and/or the carried-forward amount to an outside.

5. The charge calculation apparatus (20, 30) according to claim 1,
wherein the charge calculation section (42) is configured to acquire an additional consumable amount granted for free in accordance with a length of a print use period, and to calculate the amount of money charged while applying the additional consumable amount to the calculation.

6. The charge calculation apparatus (20, 30) according to claim 1 that is a printing apparatus (20) connected to an external server (30),
wherein the carried-forward amount calculation section (41) is configured to acquire the base amount from the server (30), and calculates the carried-forward amount on a basis of the acquired base amount.

7. A charge calculation method, comprising:
consumed amount acquisition of acquiring an amount of a consumable consumed for printing in a first period;
carried-forward amount calculation of calculating a carried-forward amount of the consumable on a basis of the consumed amount and a base amount of the consumable for the first period; and
charge calculation of calculating an amount of money charged for printing on a basis of the carried-forward amount.

8. The charge calculation method according to claim 7,
wherein, in the consumed amount acquisition, a second consumed amount that is an amount of the consumable consumed for printing in a second period that is posterior to the first period is acquired; and
wherein, in the charge calculation, the amount of money charged for the second period is calculated on a basis of the second consumed amount, a second base amount that is a base amount of the consumable for the second period, and the carried-forward amount.

9. The charge calculation method according to claim 8,
wherein, in the charge calculation, the second base amount is corrected by means of the carried-forward amount, and the amount of money charged for the second period is calculated on a basis of the corrected amount and the second consumed amount.

10. The charge calculation method according to claim 8, further comprising:
notifying;
wherein, in the charge calculation, an amount, of the consumable, left available for consumption in the second period, hereinafter referred to as a left-available-for-consumption amount, is calculated on a basis of the second base amount, which is the base amount of the consumable for the second period, and on a basis of the carried-forward amount; and
wherein, in the notifying, the left-available-for-consumption amount and/or the carried-forward amount are/is notified to an outside.

11. The charge calculation method according to claim 7,
wherein an expiration period is set for the carried-forward amount; and
wherein, in the charge calculation, on a basis of the carried-forward amount within the expiration period, the amount of money charged is calculated.

12. The charge calculation method according to claim 7,
wherein, in a second period that is posterior to the first period, a carried-forward amount application period, during which the amount of money charged is calculated on the basis of the carried-forward amount, and a carried-forward amount non-application period, during which the amount of money charged is not calculated on the basis of the carried-forward amount, are set; and
wherein, in the charge calculation, the amount of money charged for the carried-forward amount application period is calculated on the basis of the carried-forward amount, and the amount of money charged for the carried-forward amount non-application period is not calculated on the basis of the carried-forward amount.

13. The charge calculation method according to claim 7,
wherein, in the charge calculation, an additional consumable amount granted for free in accordance with a length of a print use period is acquired, and the amount of money charged is calculated while applying the additional consumable amount to the calculation.

14. The charge calculation method according to claim 7,
wherein, in the carried-forward amount calculation, the base amount is acquired from an external server (30), and the carried-forward amount is calculated on a basis of the acquired base amount.

15. A charge calculation system (10), comprising:
a server (30); and
a printing apparatus (20) capable of communicating with the server (30) via a network (NW);
wherein the printing apparatus (20) includes
a consumed amount acquisition section (40) configured to acquire an amount of a consumable consumed for printing in a first period; and
a carried-forward amount calculation section (41) configured to calculate a carried-forward amount of the consumable on a basis of the consumed amount and a base amount of the consumable for the first period; and
wherein the server (30) includes
a charge calculation section (42) configured to acquire the carried-forward amount from the printing apparatus and to calculate an amount of money charged for printing on a basis of the carried-forward amount.
